Europäisches Patentamt

European Patent Office

Office européen des brevets

(19)

(11) Publication number: **0 109 781**
**A1**

# (12) EUROPEAN PATENT APPLICATION

(21) Application number: **83306514.7**

(22) Date of filing: **26.10.83**

(51) Int. Cl.³: **B 23 D 31/00**

(30) Priority: **26.10.82 GB 8230599**

(43) Date of publication of application:
**30.05.84 Bulletin 84/22**

(84) Designated Contracting States:
**AT BE CH DE FR GB IT LI LU NL SE**

(71) Applicant: **Hawkins, Peter Arthur Taylor**
**White Cross Farm**
**Cholsey Wallingford Oxfordshire(GB)**

(72) Inventor: **Hawkins, Peter Arthur Taylor**
**White Cross Farm**
**Cholsey Wallingford Oxfordshire(GB)**

(74) Representative: **Wolff, Francis Paul**
**F.P. Wolff & Company Potkiln House**
**Goring Heath Reading RG8 7ST(GB)**

(54) **Apparatus and method for splitting internal combustion engine cylinder blocks and the like.**

(57) Two parallel spaced apart support arms (11, 12) face a blade arm (21) which is pivotally mounted and drivable by a hydraulic ram (17) or other means towards the support arms, so that an engine block supported between support surfaces (24, 25) is split by the pressure of a blade edge (28) on the blade arm. The support arms and blade arm may be cranked towards each other at one end, the blade arm end being pivotally mounted between the support arm ends; in this embodiment the blade arm and support arms may be parallel when spaced apart by a distance corresponding to the typical width of an engine block.

FIG. 1.

EP 0 109 781 A1

Croydon Printing Company Ltd.

APPARATUS AND METHOD FOR SPLITTING INTERNAL COMBUSTION
ENGINE CYLINDER BLOCKS AND THE LIKE

This invention relates to an apparatus and a method for splitting internal combustion engine cylinder blocks and the like. The invention is especially suitable for use with cast iron cylinder blocks from motor vehicle engines, especially scrap car engines, but can also be applied to splitting other large, hard and normally brittle articles, whether of iron or of some other material such as aluminium alloy.

The object of splitting such articles is to enable them to be readily handled by one man. In order to reclaim some of the valuable metal content of a scrap car, for example, the engine might be wholly or partially stripped to leave a massive cast iron cylinder block. Unskilled labour has heretofore been employed to break up such blocks into smaller pieces using sledgehammers, so that the pieces can then be charged by hand into a remelting furnace to recycle the iron after inspection and removal of unwanted metals and alloys. It would be desirable to improve this process to enable it to be carried out faster and less laboriously, but in a manner that is at the same time simple and inexpensive.

According to the present invention there is provided apparatus for splitting an internal combustion engine cylinder block or like article, comprising a pair of spaced apart support members having respective support surfaces for supporting opposite ends of the article across the space between the members, a blade arm pivotally mounted at one end adjacent the said support surfaces, and means for driving a remote end of the blade arm towards the support members beyond the article to split the article by pressure of the blade arm against the article between the supported ends of the article.

There is further provided a method of splitting an internal combustion engine cylinder block or like article, which comprises supporting opposite ends of the article across the space between support surfaces on respective ones of a pair of spaced apart support members, adjacent which support surfaces is pivotally mounted one end of a blade arm, and driving a remote end of the blade arm towards the support members beyond the article to split the article by pressure of the blade arm against the article between the supported ends of the article.

The support members are preferably elongate support members, and may be of a length substantially the same as the length of the blade arm, measured from the pivotal mounting of the blade arm. The support surfaces are desirably parallel and coplanar. In some cases they may most suitably be arranged in a horizontal plane, to support the weight of the engine block or like article; but in other cases they may more suitably be arranged in a vertical plane, to support the block against the force exerted by the blade arm only, in which case alternative means may be provided to hold the block in position before the block becomes gripped between the blade arm and the support members. The support surfaces may be shaped to positively locate the article during splitting, or they may be straight.

The blade arm may be provided with a blade edge, which may be shaped or straight. When the blade edge and the support surfaces are straight, the axis of the pivotal mounting of the blade arm may be offset from one or both of the blade edge and the support surfaces so that the blade edge and the support surfaces are spaced apart when they are brought parallel. The spacing preferably corresponds to the thickness of the engine block or like article to be split, so that the pressure begins to be exerted by the blade arm against the article when the blade edge and support surfaces are parallel. To achieve the required effect, either the blade arm or the support members, or both, may be cranked between the pivotal mounting and the blade edge or support surfaces respectively. The blade arm may then advantageously be pivotally mounted between the pair of support members.

When driven by the driving means to the furthest extent of its travel, at least part of the blade arm may pass between the spaced apart support members, and preferably at least part of the blade arm passes between the support surfaces on the support members, in order to ensure that the available motion is sufficient to split a suitably placed engine block or other article. Guide surfaces may be provided to guide the remote end of the blade arm between the support members.

The driving means is suitably a hydraulic piston and cylinder assembly, but a pneumatic or mechanical drive for example may be used in appropriate cases. The driving means is advantageously connected between the remote end of the blade arm and the support members at substantially equal distances from the pivotal mounting of the blade arm, and that distance is preferably at least twice the furthest distance from the pivotal mounting to which every one of the support surfaces and the blade edge extend, in order to ensure a satisfactory mechanical advantage and enable lighter driving means to be employed.

One embodiment of the invention is illustrated by way of example in the accompanying drawings, in which:

Figure 1 is a perspective view of an engine block splitter with its blade arm in a closed position;

Figure 2 is a similar view to Fig. 1 but simplified to show only the principal working parts of the engine block splitter, the blade arm being shown in an open position;

Figure 3 is a side elevation of the block splitter open, simplified as in Fig. 2, with an engine block shown in dashed outline ready to be split; and

Figure 4 is a side elevation similar to Fig. 3, but showing the block splitter closed, and the split engine block in dashed outline.

The apparatus shown in the drawings comprises an upper horizontally extending support arm 11 and a lower horizontally extending support arm 12 in parallel spaced relationship. Each support arm is cranked forward at one end, at which the arms are connected by a stout vertical pin 13. At their other ends, the support arms 11, 12 carry horizontal beams 14, 15 respectively which extend forwardly perpendicularly to the support arms. These beams are linked at their ends remote from the support arms by a pivoted mounting 16 for the cylinder of a hydraulic ram 17 whose piston rod 19 extends between the beams towards the support arms.

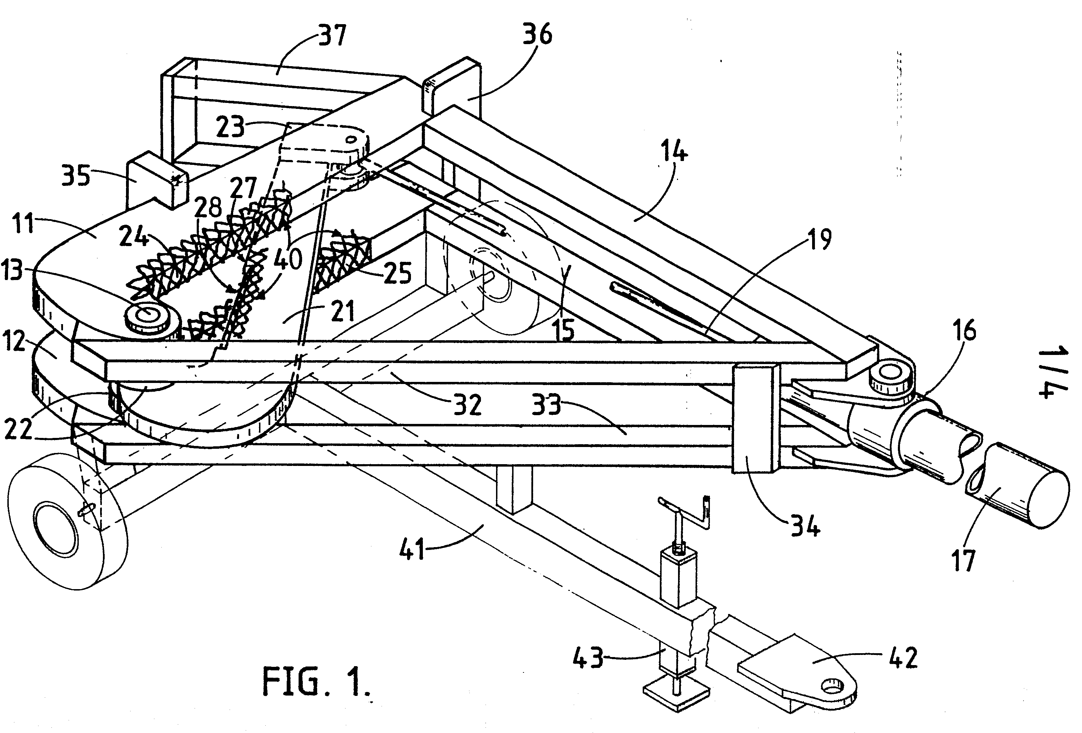

Fig. 1 shows further detail of the apparatus, including strengthening members and a support structure. A pair of parallel vertically spaced horizontally extending bracing beams 32, 33 complete upper and lower triangular frames comprising support arm 11, beam 14 and beam 32 and support arm 12, beam 15 and beam 33 respectively. In addition to being joined by pin 13 and cylinder mounting 16, these two frames are more firmly held together and strengthened by a tie plate 34 between beams 32 and 33 adjacent to cylinder mounting, and by two generally C-shaped clamping plates 35 and 36 positioned respectively across the outer, rear faces of the support arms and across the outer faces of the ends of the support arms adjacent their junctions with beams 14 and 15.

A horizontally extending blade arm 21 is cranked rearwardly at one end, at which it is pivotally mounted on the vertical pin 13 between the forwardly cranked ends of the support arms. The blade arm is reinforced by welded on bushes 22 on either side of the blade arm between the ends of the two support arms. The remote end of the blade arm is connected to the ram 17 between the beams 14 and 15 by means of a mounting 23 at the further end of the piston rod 19.

The lower face of the upper horizontal beam 14 and of the adjacent end of the upper support member 11, and the upper face of the lower horizontal beam 15 and of the adjacent end of the lower support member 12, act as guide surfaces forming between them a guide channel for the remote end of the blade arm 21. The guide channel is extended behind the support arms by a rearward extension piece 37 in which the upper and lower guide surfaces are continued, angled inwards to follow the circular path of the blade arm end.

The upper support arm 11 has a straight vertical front face 24 which extends from the cranked portion of the arm to its remote end. The lower support arm 12 is similar and has a straight vertical front face 25, coplanar with the face 24 on the upper arm, extending from the cranked portion of the arm to its remote end. The faces 24 and 25 form parallel and coplanar support surfaces for an engine block or like article.

The blade arm 21 is generally similar in form to the support arms 11 and 12, but turned over, so that the cranked portions extend towards one another and a broad vertical face 27 and a narrow edge 28 lie opposite the faces 24 and 25. The broad face 27 extends from the remote end of the blade arm for at least half the distance to the cranked end, after which it becomes the narrow tapered blade edge 28 which lies in the same plane, before reverting to a broad face at the cranked portion and beyond.

Due to the oppositely extending cranked portions, the pivot axis defined by the pin 13 lies between and equidistant from the plane of the support surfaces 24 and 25 of the support arms on the one hand and the plane of the operative surfaces 27 and 28 of the blade arm on the other hand, and the extent of the cranks is such that when the blade arm is closed towards the support arms until all the aforesaid surfaces are parallel, the blade arm operative surfaces are spaced from the support surfaces by a distance equal to the typical breadth of a car engine cylinder block.

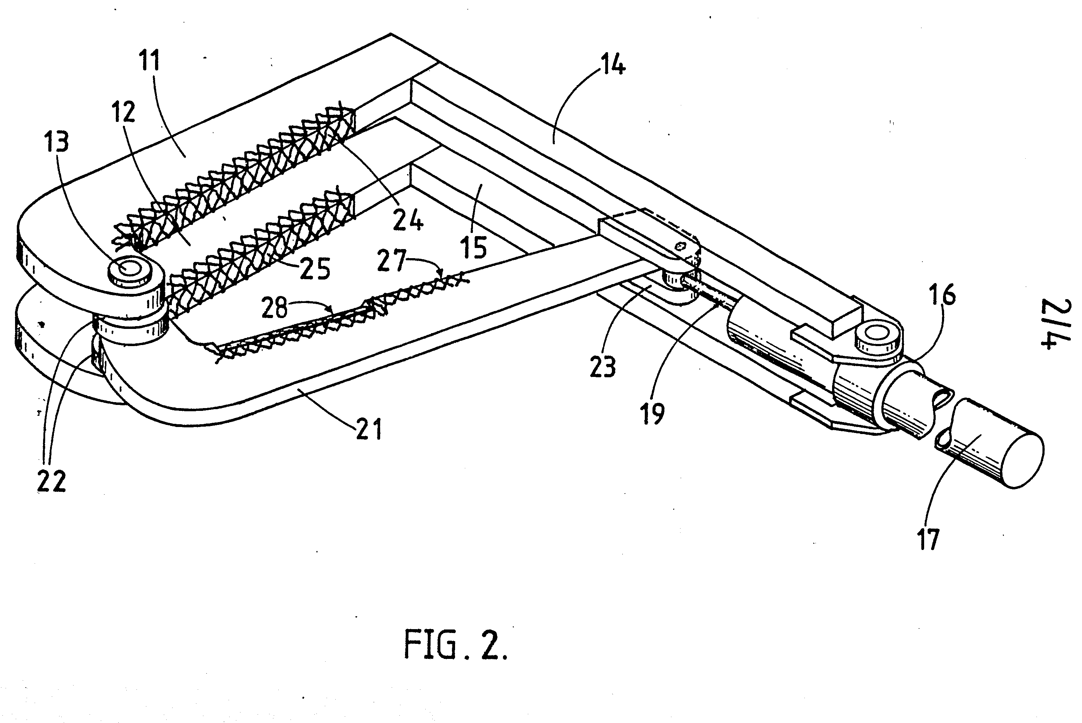

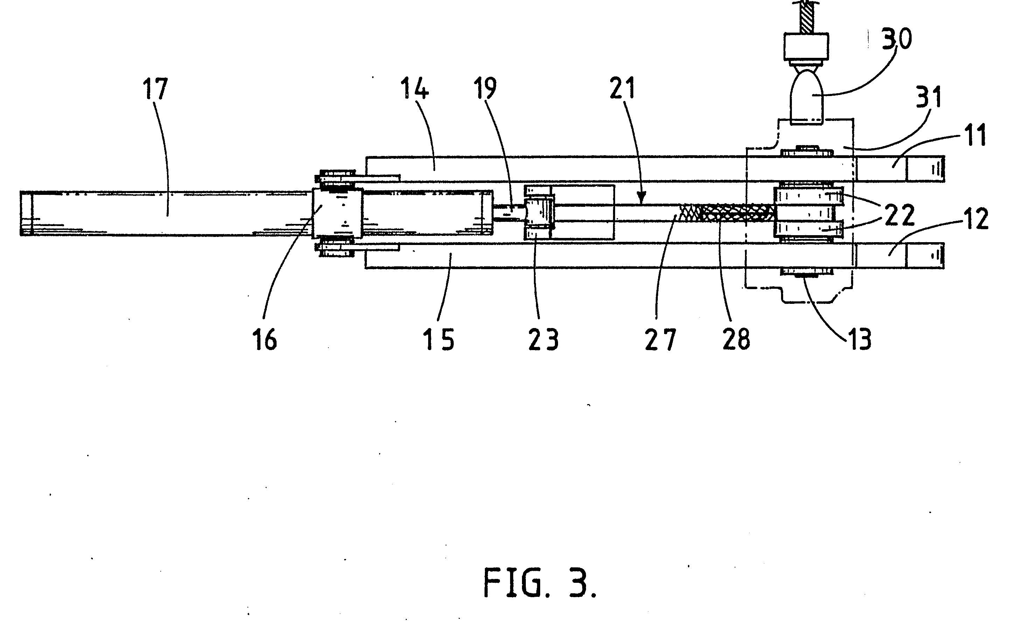

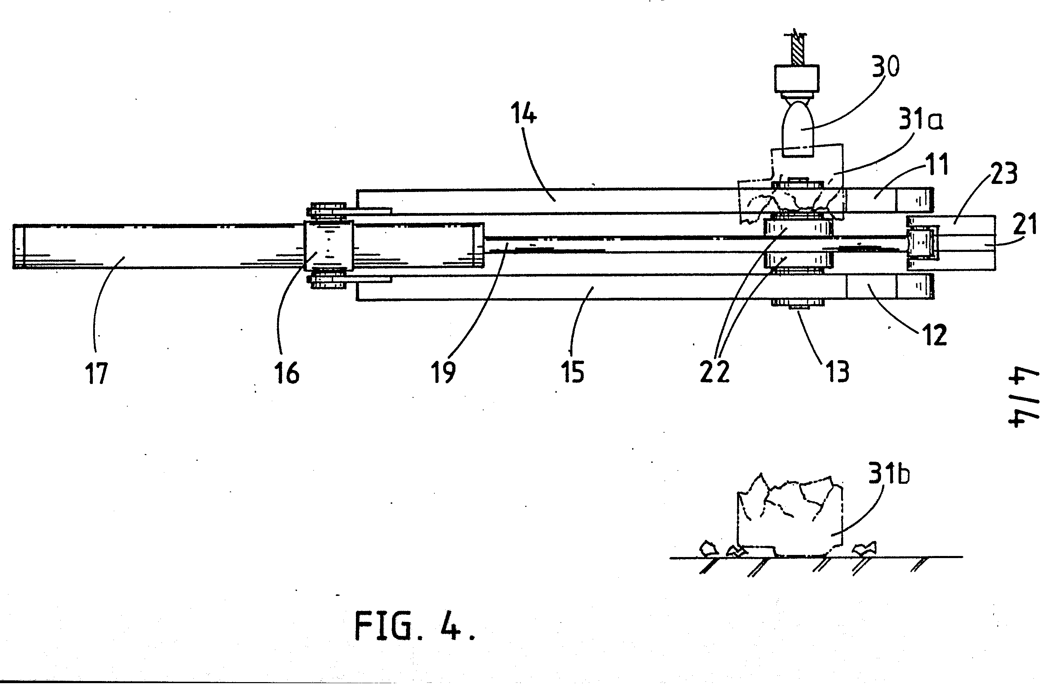

In use, the ram 17 is contracted to open the apparatus (Figs. 2 and 3) and a cast iron cylinder block or like article 31 can then be positioned against the support surfaces 24 and 25, preferably opposite the blade arm edge 28 with the top or piston side of the block towards the pin 13, by means of a hoist 30. The ram 17 is then extended to drive the blade edge 28 against the engine block between its supported ends and to split it as the remote end of the blade arm 21 passes into and beyond the space between the support arms 11 and 12 (Figs. 1 and 4) and

- 6 -

into the guide channel extension piece 37. The lower part of the engine block 31b immediately falls to the ground, to be followed by the upper part 31a when released from the hoist and, if necessary, when the blade arm has been retracted to its starting position. If the block still contains other components such as camshaft, crankshaft or other items not of cast iron, they can now be readily separated from the iron before the latter is charged to a remelting furnace.

The support arms and the blade arms may be of wear resistant steel, or of high tensile steel, in which case the support surfaces of the support arms and the operative surfaces of the blade arm may be given a wear resistant hard facing deposit, illustrated in the form of criss-cross weld beads 40. The blade arm guide surfaces described are particularly desirable when high tensile steel is used, because its springy nature under the forces that can be applied in the apparatus could otherwise cause problems, including damage to the cylinder 17.

To split an engine block resting on a horizontal table by downward pressure may typically require a ram capable of exerting a force of 100 tonnes: in the embodiment of the invention shown in the accompanying drawings, the mechanical advantage of between $2\frac{1}{2} : 1$ and $3 : 1$ combines with the advantageous configuration of the blade arm and support surfaces to achieve splitting with a ram giving a direct thrust of only 16 or 20 tonnes. The invention accordingly enables stripped or unstripped engine blocks and other substantial cast metal objects to be split simply and economically for recovery of the various metallic components as valuable scrap in a form that can readily be manually handled.

Fig. 1 shows the engine block splitter mounted at three points on a two-wheeled T-form trailer chassis 41 provided with a forward towing attachment 42 and adjustable stand 43. Other forms of support structure may readily be envisaged, according to whether the apparatus is to be mobile or static and the preferred orientation in which it is to be used.

0109781

## CLAIMS

1.  Apparatus for splitting an internal combustion engine cylinder block or like article, characterised in that the apparatus comprises a pair of spaced apart support members (11, 12) having respective support surfaces (24, 25) for supporting opposite ends of the article (31) across the space between the members, a blade arm (21) pivotally mounted at one end adjacent the said support surfaces, and means (17) for driving a remote end of the blade arm towards the support members beyond the article to split the article by pressure of the blade arm against the article between the supported ends of the article.

2.  Apparatus according to claim 1, wherein the support members (11, 12) are elongate support members and their respective support surfaces (24, 25) are parallel and coplanar.

3.  Apparatus according to claim 1 or claim 2, wherein the blade arm (21) is provided with a blade edge (28).

4.  Apparatus according to claim 3, wherein the support surfaces (24, 25) and the blade edge (28) are straight, and the axis of the pivotal mounting (13) of the blade arm (21) is offset from one or both of the blade edge and the support surfaces so that the blade edge and the support surfaces are spaced apart when they are brought parallel.

5.  Apparatus according to any use of the preceding claims, wherein the blade arm (21) is pivotally mounted between the pair of support members (11, 12) and one or both of the blade arm and the support members are cranked between the pivotal mounting (13) and the blade edge (28) or support surfaces (24, 25) respectively.

6.  Apparatus according to any one of the preceding claims, wherein at least part of the blade arm (21) passes between the support surfaces (24, 25) on the support members (11, 12) when driven by the driving means (17) to the furthest extent of its travel.

7. Apparatus according to claim 6, wherein guide surfaces are provided to guide the movement of the said remote end of the blade arm (21) between the support members (11, 12).

8. Apparatus according to any one of the preceding claims wherein the driving means (17) is connected between the remote end of the blade arm (21) and the support members (11, 12) at substantially equal distances from the pivotal mounting of the blade arm.

9. Apparatus according to claim 3 and claim 8 wherein the said distance is at least twice the furthest distance from the pivotal mounting (13) to which every one of the support surfaces (24, 25) and the blade edge (28) extends.

10. A method of splitting an internal combustion engine cylinder block or like article, characterised by supporting opposite ends of the article (31) across the space between support surfaces (24, 25) on respective ones of a pair of spaced apart support members (11, 12), adjacent which support surfaces is pivotally mounted one end of a blade arm (21), and driving a remote end of the blade arm towards the support members beyond the article to split the article by pressure of the blade arm against the article between the supported ends of the article.

FIG. 1.

1/4

0109781

FIG. 2.

FIG. 3.

3/4

0109781

FIG. 4.

4/4

010 9781

European Patent
Office

**EUROPEAN SEARCH REPORT**

Application number

EP 83 30 6514

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | FR-A-2 353 206 (CARDONA)<br><br>* Page 2, line 23 - page 3, line 8; claim 1; figure 1 * | 1-3,6, 10 | B 23 D 31/00 |
| Y | US-A-3 279 295 (TEPLITZ)<br>* Claim 1; figures 1-6 * | 1-3,10 | |
| A | DE-A-2 717 620 (LINDEMANN MASCHINENFABRIK GMBH)<br>* Figure 1 * | 1-3,6 | |
| A | GB-A-1 392 022 (CHAZEN)<br>* Claim 1; figures 1-4 * | 1 | |
| A | DE-B-2 061 060 (FOUNDRY SUPPLIERS INC.) | | **TECHNICAL FIELDS SEARCHED (Int. Cl. 3)** |
| A | GB-A- 953 163 (SELECT ENTERPRISE INC.) | | B 23 D 15/00<br>B 23 D 17/00<br>B 23 D 29/00<br>B 23 D 31/00<br>B 30 B 9/32 |

The present search report has been drawn up for all claims

| Place of search<br>BERLIN | Date of completion of the search<br>18-01-1984 | Examiner<br>MARTIN A E W |
|---|---|---|